# EUROPÄISCHE PATENTSCHRIFT

(11) **EP 3 056 459 B1**
(45) Veröffentlichungstag und Bekanntmachung des Hinweises auf die Patenterteilung: **29.11.2017**
(21) Anmeldenummer: 16153862.4
(22) Anmeldetag: 02.02.2016
(51) Int. Cl.: B42C 1/10, B65H 39/065, B65H 33/16, B65H 39/115, B65H 29/00, B65H 31/24, B65H 43/04

(54) **VERFAHREN ZUM BETRIEB EINER DRUCKWEITERVERARBEITUNGSANLAGE UND DRUCKWEITERVERARBEITUNGSANLAGE**
METHOD FOR OPERATING A POST-PROCESSING DEVICE AND POST-PROCESSING DEVICE
PROCÉDÉ DE FONCTIONNEMENT D'UN DISPOSITIF DE POST-TRAITEMENT ET DISPOSITIF DE POST-TRAITEMENT

(30) Priorität: 13.02.2015 CH 1972015
(43) Veröffentlichungstag der Anmeldung: 17.08.2016
(73) Patentinhaber: Ferag AG, 8340 Hinwil (CH)
(72) Erfinder: GALLATI, Rudolf, 8732 Neuhaus (CH)
(74) Vertreter: Rentsch Partner AG

(56) Entgegenhaltungen:
- EP-A1- 0 894 721
- US-A1- 2010 262 279
- US-A1- 2013 149 096

## Beschreibung

Die Erfindung betrifft ein Verfahren zum Betrieb einer Druckweiterverarbeitungsanlage zum Herstellen und Verarbeiten von Druckprodukten, insbesondere zum Bilden von Stapeln oder Paketen aus Druckproduktkollektionen umfassend komplettierte Druckendprodukte wie Zeitschriften und Zeitungen, die vorzugsweise aus einem Mantelprodukt und einer Mehrzahl von Teilprodukten und/oder Beilagen zusammengestellt sind. Die vorliegende Erfindung betrifft zudem eine Druckweiterverarbeitungsanlage zur Durchführung des Verfahrens.

An die Druckweiterverarbeitung werden mit zunehmender Regionalisierung und/oder Personalisierung des redaktionellen Inhalts der Produkte, aber insbesondere der Werbebeilagen immer höhere Anforderungen gestellt. Einerseits müssen zur Steigerung der Rentabilität die Verarbeitungskapazitäten gesteigert werden, andererseits müssen die Produkte auch für kleine Verteilrouten oder Regionen fehlerlos mit möglichst geringem manuellem Aufwand versandfertig gemacht werden können.

Im stark umkämpften Werbemarkt werden an die Anbieter von Printwerbung und damit an die Druckweiterverarbeitung immer höhere Ansprüche gestellt und immer weniger Fehler toleriert. Da Werbekunden nur noch sehr niedrige Fehlerraten im niedrigen Promillebereich akzeptieren, müssen Fehler bei der Zusammenstellung der Produkte vermieden oder aufwändig und kostspielig von Hand korrigiert werden.

Aus dem Stand der Technik sind verschiedene Verfahren bekannt, um sicherzustellen, dass die Produkte in der korrekten Reihenfolge oder Sequenz zusammengestellt werden um den manuellen Reparaturaufwand möglichst gering zu halten.

So wird zum Beispiel in der WO 2013/159238 ein Verfahren und eine Vorrichtung zum Erstellen eines Produktstroms aus einer Mehrzahl von Produkteinheiten in einer vorgegebenen Sequenz vorgeschlagen, mittels welchem fehlerhafte Produkteinheiten einer Sequenz ohne Produktionsunterbruch sowie unter Einhaltung der vorgegebenen Sequenz korrigiert werden können. Bei diesem Verfahren zum Erstellen eines getakteten Produktstroms von Produkteinheiten in einer vorgegebenen Sequenz werden in einem ersten Schritt Produkte zur Gruppierungsstrecke einer ersten Fördereinrichtung zugeführt, dann wird ein getakteter Produktstroms von Produkteinheiten aus den zugeführten Produkten entlang der Gruppierungsstrecke in einer vorgegebenen Sequenz erstellt und die Produkteinheiten werden in der vorgegebenen Sequenz an eine Wegfördereinrichtung übergeben und in einem getakteten Produktstrom weggefördert.

Kommt es beim Erstellen der Produkte zu Fehlern, so können diese nachträglich dadurch korrigiert werden, dass an einer Ausschleusstation einzelne Produkte der Produkteinheit oder die ganze fehlerhafte Produkteinheit ausgeschleust, und die Produkteinheit vervollständigt oder vollständig neu erstellt wird. Insbesondere wird aber vorgeschlagen, dass beim Fehlen lediglich einzelner Produkte in der Produkteinheit die unvollständigen Produkteinheit der Gruppierungsstrecke wieder zugeführt und vervollständigt werden.

Die fehlende oder fehlerhafte Produkteinheit wird also nachträglich in der Gruppierungsstrecke korrekt erstellt und anschliessend der Wegfördereinrichtung übergeben. Um diese Produkteinheit zur Wiederherstellung der vorgegebenen Produktsequenz an die korrekte Position innerhalb dieser Sequenz nachträglich einzufügen ist in der WO 2013/159238 eine Überbrückungseinrichtung vorgesehen, die es erlaubt unter Überbrückung eines Förderstreckenabschnittes der Wegfördereinrichtung zeitlich nachfolgend der Produktlücke zuzuführen. Auf diese Weise wird die vorgegebene Sequenz von Produkteinheiten in der Wegfördereinrichtung in einer vollständig sortierten Abfolge für weitere Verarbeitungsprozesse bereit gestellt. Die Produkteinheiten sind bevorzugt individualisiert und beispielsweise einem bestimmten Empfänger bzw. einer bestimmten Empfängeradresse zugeordnet.

Die EP 0511159 beschreibt ein Verfahren und eine Vorrichtung, die zum Zusammenstellen von vorgegebenen Sequenzen von komplexen Produkteinheiten durch Einstecken von Teilprodukten in ein Hauptprodukt dienen, wobei verhindert werden soll, dass fehlerhafte Gruppen entstehen. Dabei werden verschiedene, als kontinuierliche Ströme zugeführte Produkte entlang mindestens einer Gruppierungsstrecke, realisiert durch einen Bandförderer, zu Gruppen zusammengeführt. Jede Gruppe soll eine vorgegebene Abfolge von Produkten aufweisen. Um Fehler im abgelegten Produktstrom aufgrund von Fehlern in der Zuführung zu vermeiden, wird vorgeschlagen, die Produkte noch in den Zuführungsströmen vor der Abgabe an die Gruppierungsstrecke zu puffern, z.B. mittels entsprechender Zwischenförderer. Die Abgabe soll erst erfolgen, wenn in allen Puffern eine ausreichende Anzahl von Produkten zur Erstellung einer kompletten Gruppe vorhanden ist. Gegebenenfalls wird die Erstellung einer Gruppe so lange verzögert, bis dies der Fall ist. Dies erfolgt im Wesentlichen mit drei Verfahrensschritten: einer Zuführungskontrolle der einzelnen Zuführungen, einer Zuführungspufferung der einzelnen Zuführungen und einer gesteuerten Abgabe der einzelnen Produkte in eine getaktete Gruppierung. Mit der Zuführungskontrolle werden Fehler, bzw. Lücken, in den Zuführungen der Produkte detektiert. Mit der gesteuerten Abgabe, die demselben Takt unterworfen ist wie die Gruppierung, werden die zugeführten Produkte entsprechend der vorgegebenen Zusammensetzung der einzelnen Gruppen und entsprechend der detektierten Fehler in die Gruppierung abgegeben. Mit der Zuführungspufferung wird eine trotz nicht kontinuierlicher Abgabe kontinuierliche Zuführung ermöglicht.

Die US2010/0262279 A1 beschreibt eine Anlage zum Bearbeiten von Druckprodukten, umfassend Steuereinrichtungen zum Zugreifen auf mindestens eine Datenbank, die Empfänger, denen die Druckprodukte zugesandt werden sollen, aufweist; mindestens zwei Primärlinien zum Bearbeiten von Druckprodukten, wobei jede der Primärlinien mindestens eine Beschickungsvorrichtung zum Beschicken der Primärlinie mit Druckprodukten aufweist; mindestens eine Umgruppierungslinie, die von den Steuereinrichtungen gesteuert wird und einer Zustellungsroute zugeteilt ist; eine Verteilungslinie, die von den Steuereinrichtungen gesteuert wird; eine erste Transfervorrichtung für jede Primärlinie, wobei diese erste Transfervorrichtung von den Steuereinrichtungen gesteuert wird, um Druckprodukte von der entsprechenden Primärlinie zur Verteilungslinie zu transferieren; mindestens eine zweite Transfervorrichtung zum Transferieren von Druckprodukten von der Verteilungslinie zur Umgruppierungslinie, wobei die Steuereinrichtungen konfiguriert sind, um die Druckprodukte über die erste und zweite Transfervorrichtung und über die Verteilungslinie zur Umgruppierungslinie transferieren zu lassen, so dass die Druckprodukte umgruppiert in eine Ordnung, die eine Umgruppierung gemäß Empfänger erlaubt, die Umgruppierungslinie erreichen, Die Umgruppierungslinie weist eine von den Steuereinrichtungen gesteuerte Identifikationsvorrichtung auf.

Die US2013/0149096 A1 beschreibt eine Einrichtung zur Herstellung von Zusammenstellungen aus Produkteinheiten, insbesondere aus oder mit Druckereiprodukten, gekennzeichnet durch wenigstens ein Verstellmittel zur Verstellung von wenigstens einer Bauteilanordnung der Einrichtung an veränderte Dimensionen von nacheinander der Einrichtung zugeführten Produkteinheiten zur Ausrichtung der Produkteinheiten in der Einrichtung bei fortgeführtem und insbesondere lückenlosem Förderbetrieb.

Die vorgenannten Vorrichtungen zum korrigieren von Fehlern bei der Durckendprodukt-Herstellung und zum Sicherstellen der korrekten Produktsequenz verteuern die Anlagen zur Druckweiterverarbeitung und machen diese wesentlich komplexer in Hinblick auf die Mechanik, aber auch auf die Steuerung.

Entsprechend wird oft auf sie verzichtet und korrigierte oder nachproduzierte, personalisierte Druckendprodukte müssen nachträglich manuell an die korrekte Position innerhalb ihrer Routensequenz eingefügt werden. Bei Druckweiterverarbeitungsanlagen, die über eine automatische Reparaturfunktion verfügen, können zum Beispiel unvollständig zusammengetragene Kollektionen in einem weiteren Durchlauf ergänzt werden. Dies bedingt aber, dass zumindest die Stapeleinrichtung für die Dauer des Reparaturzyklus auf die korrigierten oder, im Falle einer vollständigen Nachproduktion, auf die nachproduzierten Endprodukte warten muss. Diese Wartezeit verringert die Leistung der Anlage erheblich.

Es ist eine Aufgabe der vorliegenden Erfindung, ein Verfahren und eine Vorrichtung zum Erstellen eines paketierten Produktestroms aus einer Mehrzahl von Produkteinheiten in einer vorgegebenen Sequenz zur Verfügung zu stellen, bei dem mit einer möglichst einfachen Konstruktion und geringem apparativem Aufwand korrekte routengerecht paketierte Produkteinheiten in einer vorgegebenen Sequenz herstellbar sind. Wobei das Beheben von Fehlern bei der Erstellung der Produkteinheiten ermöglicht wird ohne dass die Gesamtleistung oder die Verarbeitungsgeschwindigkeit der Druckweiterverarbeitungsanlage wesentlich reduziert werden muss.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass die Produkteinheiten - vorzugsweise Druckendprodukte - gemäss einem vorgegebenen Produktionsplan routengerecht aber noch nicht personalisiert hergestellt werden. In dem Produktionsplan ist eine Produktionssequenz (Soll) festgelegt, die die Produkttypen und die Anzahl aller zu produzierenden Produkteinheiten für alle Routen umfasst. Für eine Route werden jeweils eine vorgegebene Anzahl identischer Produkteinheiten vom routenspezifischen Typ hergestellt. Werden also für eine bestimmte Verteilroute eine Anzahl x identischer aber für die Route spezifisch aus Haupt-, Teilprodukten und Beilagen zusammengestellter Druckendprodukte oder Produkteinheiten (entsprechend dem Routentyp) benötigt, so muss in einem ersten Schritt lediglich sichergestellt werden, dass eine ausreichende Anzahl x kompletter Produkteinheiten von diesem Typ für diese Route hergestellt werden. Die Sequenz der einzelnen Produkteinheiten innerhalb der Route ist noch nicht relevant, da die Produkteinheiten noch nicht personalisiert sind.

Kommt es beim Herstellen der Produkteinheiten zu Fehlern, so werden die fehlerhaft zusammengestellte Produkteinheiten auf bekannte Weise erkannt und korrigiert oder ausgeschleusst. Werden fehlerhafte Produkteinheiten ausgeschleusst, so muss eine entsprechende Anzahl weiterer Produkteinheiten vom selben Typ hergestellt werden, damit für die Route die nötige Anzahl an Produkteinheiten oder Druckendprodukten zur Verfügung stehen.

Passieren die Fehler bei der Herstellung der Produkteineheiten gegen Ende einer Route in der Produktionssequenz, so kann dies dazu führen, dass die tatsächliche Produktesequenz (Ist) von der geplanten Produktionssequenz (Soll) abweicht. Es kann dazu kommen, dass einzelne oder mehrere Produkteinheiten vom Typ einer vorgängig hergestellten Route zwischen Produkteinheiten eines anderen Typs, wie er für eine nachfolgend hergestellte Route benötigt wird, zu liegen kommen.

Dank der vorliegenden Erfindung führen solche Abweichungen bei der tatsächlichen Abfolge der Produkte nach ihrer Herstellung (d.h. der Produktesequenz) von der geplanten Abfolge (d.h. der Produktionssequenz) nicht zu fehlerhaften Produktesequenzen oder Gangfolgen in den fertigen Paketen die zur Verteilung an die Endkunden hergestellt werden.

Die Personalisierung, zum Beispiel in Form einer Adressierung durch einen Adressaufdruck, erfolgt gemäss der vorliegenden Erfindung nicht schon vor- oder bei der Herstellung der Produkteinheiten, sondern erst unmittelbar vor Erstellen des Stapels in oder bei der Abgabe an die Stapeleinrichtung. Damit ist im Moment des Personalisierens sichergestellt, dass nur korrekt zusammengestellte Produkteinheiten oder Druckendprodukte adressiert werden. Mit der Adressierung ist der genaue Routenverlauf, respektive die genaue Sequenzabfolge festgelegt, da die Adresse die Position innerhalb der Route oder Sequenz festlegt.

Beim erfindungsgemässen Verfahren zum Betrieb einer Druckweiterverarbeitungsanlage zum Herstellen und Verarbeiten von Produkteinheiten, insbesondere von komplettierten Druckendprodukten wie Zeitschriften und Zeitungen, die vorzugsweise aus einem Mantelprodukt und einer Mehrzahl von Teilprodukten und/oder Beilagen zusammengestellt sind, werden die Produkteinheiten gemäss einem vorgegebenen Produktionsplan routengerecht, das heisst in der gewünschten Anzahl für die Route und im gewünschten Typ für die Route hergestellt. Die Produktsequenz wird mittels mindestens einer Stapeleinrichtung zu einer Sequenz von Paketen verarbeitet, wobei die Produkteinheiten erst unmittelbar vor oder erst in der mindestens einen Stapeleinrichtung personalisiert, vorzugsweise adressiert werden und mittels einer Abgabestation, die zur Personalisierung, vorzugsweise zur Adressierung in der Lage ist, werden alle nicht in der mindestens einen Stapeleinrichtung verarbeiteten Produkteinheiten aus der Produktesequenz, die zur gleichen Route gehören, personalisiert und zur Paketierung bereitgestellt.

Wie bereits erwähnt, werden bei Fehlern bei der Herstellung der Produkteinheiten oder Druckendprodukte die fehlerhaften Produkte ausgeschieden und nachproduziert, oder korrigiert. Beides kann dazu führen, dass die nachproduzierten oder korrigierten Druckendprodukte in der Produktesequenz nicht mehr innerhalb ihrer Route liegen. Dies kann gemäss der vorliegenden Erfindung akzeptiert werden, so dass Wartezeiten dadurch vermeiden werden können, dass bereits mit der Produktion der Druckendprodukte für eine nachfolgende Route begonnen wird, auch wenn noch einzelne oder mehrere fehlerhafte Produkte der vorhergehenden Route korrigiert oder nachproduziert werden müssen.

In der Stapelvorrichtung werden alle antransportierten Produkteinheiten oder Druckendprodukte einer Route sequenzrichtig adressiert und abgestapelt. Die letzten Einheiten einer Route aus dem angelieferten Produktestrom, welche kein Normpaket mehr ergeben, werden üblicherweise in der Stapeleinrichtung zu einem Spitzenpaket verarbeitet. Spitzenpakete umfassen entsprechend immer eine kleinere Anzahl von Produkteinheiten als Normpakete.

Alternativ können sie auch in einer Abgabestation automatisch oder manuell zu einem Paket zusammengefasst werden. Bei dieser Ausführungsform werden die letzten Produkteinheiten einer Route, die zusammen kein Normpaket, d.h. kein Paket mit der maximalen Anzahl von Produkteinheiten im Paket, mehr ergeben, über die Abgabestation abgegeben und in dieser Station auch adressiert. Diese Produkteinheiten, die das Routenende bilden, werden in der Abgabestation abgegeben und automatisch oder manuell zu einem Paket zusammengefasst und als Spitzen-Paket automatisiert oder vorzugsweise manuell als letztes Paket der herzustellenden Paketsequenz den übrigen Paketen der Route zugegeben. Auf diese Weise werden die Stapeleinrichtungen komplett von der Herstellung von Spitzenpaketen entlastet und können mit maximaler Verarbeitungskapazität arbeiten.

Das eine oder die mehreren korrigierten oder nachproduzierten Produkte der Route, die in der Produktsequenz nicht mehr innerhalb ihrer Route, sondern erst verspätet aus der Herstellung angeliefert werden können, werden nicht in der Stapeleinrichtung verarbeitet, sondern zur Abgabestation transportiert, dort adressiert (zum Beispiel durch Aufdrucken der Empfängeradresse oder Aufkleben eines Empfänger-Etiketts) und zu einem End-Paket zusammengefasst. Dieses kann automatisiert oder manuell geschehen. Anschliessend wird dieses End-Paket als letztes Paket der Paketsequenz den übrigen Paketen der Route zugegeben. Dadurch wird vermieden, dass die Stapeleinrichtung auf diese Produkte warten muss und sie kann sofort nach Herstellen des letzen Pakets einer Route mit der Paketherstellung für die nächste Route beginnen.

Um die Anlage zur Druckweiterverarbeitung mit höchstmöglicher Geschwindigkeit betreiben zu können, können also einerseits Wartezeiten der Stapeleinrichtungen vermieden und andererseits die Anzahl herzustellender Spitzenpakete reduziert werden.

Die vorlegende Erfindung ermöglicht die Herstellung von Paketen mit korrekten, routengerechten Produktsequenzen wobei auch bei Fehlerkorrektur oder Nachproduktion von Produkten der Route nur ein End-Paket manuell den übrigen Paketen der Route zugegeben werden muss. Die manuelle Bearbeitung beschränkt sich auf ein Minimum, vorzugsweise auf das Zuführen des End-Pakets zu den übrigen Paketen der Route.

Es ist zudem durch die vorliegende Erfindung gemäss einer weiteren Ausführungsform möglich, die mindestens eine Stapeleinrichtung konstant mit der maximalen Geschwindigkeit zu betreiben, da nur Normpakete unter Ausnutzung der vollen Paketgrösse hergestellt werden.

Mit Hilfe der Stapeleinrichtung wird in diesem Fall automatisch eine ganzzahlige Anzahl x/n Normpakete hergestellt, wobei x der Gesamtzahl der Produkteinheiten für die Route und n der Anzahl an Produkteinheiten im Normpaket entspricht. Die zum Erreichen der kompletten Anzahl x der Route nötige Rest r wird in der Abgabestation adressiert und abgegeben. Dadurch wird erreicht, dass in den Stapeleinrichtungen unter Ausnutzung der vollen Kapazität nur Normpakete mit korrekter Produkteinheiten-Sequenz hergestellt werden, während die restlichen Produkteinheiten ebenfalls in der korrekten Sequenz in der Abgabestation in einem Rest-Paket anfallen.

Falls es die Kapazität der Druckweiterverarbeitungsanlage verlangt, kann mehr als eine Stapeleinrichtung eingesetzt werden. Die Herstellung der Normpakete und allenfalls der Spitzenpakete erfolgt dann auf bekannte Weise unter Ausnutzung der Kapazität beider Stapeleinrichtungen. Die korrekte Sequenz der Produkteinheiten in einem einzelnen Stapel ist durch die Adressierung unmittelbar vor der Stapelbildung gewährleistet. Die Aufteilung der Adressen für bestimmte Pakete und damit der Sequenzabschnitte die in einer bestimmten Stapeleinrichtung hergestellt werden, kann auf verschiedene Arten vorgenommen werden. Je nach Positionierung der Stapeleinrichtung und je nach Weitertransportmöglichkeiten der fertigen Normpakete können die Normpakete in abwechselnder Reihenfolge von den Stapeleinrichtungen bezogen werden um in der korrekten Reihenfolge zum Weitertransport zusammengestellt zu werden. Gleiches gilt auch für das oder die Spitzenpakete. Es kann aber auch ein erster Abschnitt einer Route komplett mit einer ersten Stapeleinrichtung paketiert werden und ein zweiter, dritter etc. Abschnitt der Route wird mit einer zweiten, dritten etc. Stapeleinrichtung verarbeitet. Während im ersten Fall die Normpakete wechselweise zur korrekten Paketsequenz zusammengestellt werden, müssen im letzteren Fall die Mehrzahl von Paketen, die jeweils einen Routenabschnitt bilden und zum Beispiel gemeinsam auf einem oder mehreren Paletten vorliegen, zum Versand nur noch Abschnittsweise also zum Beispiel palettweise in die richtige Reihenfolge gebracht werden.

Ausgehend vom vorgängig festgelegten Routen-Produktionsplan und der maximalen Paketgrösse, das heisst der maximalen Anzahl von Produkteinheiten und/oder Kollektionen in einem Normpaket, wird für die eine oder die mehreren Stapeleinrichtungen eine Paketsequenz aus Normpaketen und die Grösse des Spitzen-Pakets errechnet. Der Produktionsplan umfasst die Information über die Art und Anzahl von Produkteinheiten in jedem Paket, deren Adressierung und die Sequenz der Pakete zum Versand, zur Verladung oder zum Zwischenlagern. Kommt es zu Fehlern bei der Produktion der Druckendprodukte, die gegen Ende einer Routensequenz auftreten, so werden zunächst alle korrekt hergestellten Druckendprodukte über die Stapeleinrichtungen allenfalls über die Abgabevorrichtung zu Norm- und Spitzenpaketen verarbeitet. Unmittelbar anschliessend werden von den Stapeleinrichtungen die Druckendprodukte der nächsten Route verarbeitet. Die nachträglich antransportierten korrigierten oder nachproduzierten Druckendprodukte werden nicht mehr über die Stapeleinrichtungen verarbeitet, da diese nicht "warten", sondern über die Abgabeeinrichtungen adressiert und abgegeben.

Eine Druckweiterverarbeitungsanlage gemäss der vorliegenden Erfindung zum Herstellen und Verarbeiten von Produkteinheiten, insbesondere von Druckproduktkollektionen aus komplettierten Druckendprodukten wie Zeitschriften und Zeitungen, die vorzugsweise aus einem Mantelprodukt und einer Mehrzahl von Teilprodukten und/oder Beilagen routengerecht zusammengestellt sind, umfasst eine Vorrichtung zum routengerechten Herstellen der Produkteinheiten gemäss einem vorgegebenen Produktionsplan und eine Transporteinrichtung zum Transportieren der Produkteinheiten zu mindestens einer Stapeleinrichtung und/oder zu einer Abgabestation. Die Mantelprodukte sind vorzugsweise Hauptprodukte, Falzbogen oder Umschläge. In Transportrichtung unmittelbar vor oder in der mindestens einen Stapeleinrichtung und der Abgabestation ist jeweils eine Personalisierungseinheit angeordnet.

Vorzugsweise umfasst die Personalisierungseinheit eine Adressiereinheit, wobei diese wiederum bevorzugt ein Drucker, zum Beispiel ein Tintenstrahldrucker, oder eine Etikettiereinheit ist.

Die Vorrichtung zum routengerechten Herstellen der Produkteinheiten umfasst gemäss bevorzugter Ausführungsformen eine Sammelstrecke mit einer ersten Fördereinrichtung, vorzugsweise einem Bandförderer oder einem Förderer mit Rückführ- und Korrekturfunktion, wie sie von der Anmelderin unter den Bezeichnungen "Rollstream" und "Flystream" seit Jahren erfolgreich hergestellt und vertrieben werden, und eine Mehrzahl von Zuführvorrichtungen für vorzugsweise Teilprodukte und/oder Beilagen. Damit werden Kollektionen aus Teilprodukten und/oder Beilagen hergestellt.

Gemäss weiterer bevorzugter Ausführungsformen umfasst die Vorrichtung zum routengerechten Herstellen der Produkteinheiten eine Einsteckvorrichtung, vorzugsweise eine Einstecktrommel, oder eine Einschlagvorrichtung in denen die Kollektionen aus Teilprodukten und/oder Beilagen in ein Mantelprodukt eingesteckt oder eingeschlagen werden.

Vorzugsweise ist die Transporteinrichtung ein Greifertransporteur, der die Mantelprodukte von einem Anleger zur Einsteckvorrichtung und nach dem Einstecken der Kollektion aus Teilprodukten und/oder Beilagen die Produkteinheiten zur Stapeleinrichtung und/oder zur Abgabeeinrichtung transportiert. Die Mantelprodukte können auch auf andere Art zur Einsteckvorrichtung gefördert werden. Dem Fachmann sind andere Fördermittel aus dem Stand der Technik bekannt und die Mantelprodukte können von einem Anleger auch direkt in eine Einsteckvorrichtung abgegeben werden.

Gemäss einer weiteren vorteilhaften Ausführungsform werden die in den Stapeleinrichtungen hergestellten Normpakete mit ablesbaren Informationen zu ihrem Inhalt und vorzugsweise einer Paket-Identifikation zur Route versehen. Diese zusätzlichen Informationen können auf ein Deckblatt gedruckt sein, das in der Stapeleinrichtung auf das Paket aufgelegt wird, oder sie können direkt auf ein Aussenseite des Pakets, vorzugsweise eine aussen liegende und damit sichtbare Seite eine untersten oder obersten Druckendprodukts im Paket aufgedruckt oder als Etikett angebracht oder aufgeklebt sein.

Das erfindungsgemässe Verfahren hat sich als robust gegenüber Produktionslücken erwiesen, die durch ausgeschleusste fehlerhafte Druckendprodukte im Förderstrom entstehen. Da erst die korrekt hergestellten Druckendprodukte beim Einlauf in die Stapelvorrichtungen in der korrekten Reihenfolge personalisiert werden, spielt es keine Rolle wenn Lücken zwischen diesen Druckendprodukten bestehen. Im Paket sind die Lücken geschlossen und die korrekte Gangfolge im Stapel ist immer gewährleistet.

Gemäss weiterer Ausführungsformen des erfindungsgemässen Verfahrens und der Anlage, umfasst die Abgabeeinrichtung eine Stapeleinrichtung.

### KURZE ERLÄUTERUNG DER FIGUREN

Die Erfindung soll nachfolgend anhand von Ausführungsbeispielen im Zusammenhang mit den Zeichnung näher erläutert werden. Es zeigen:
- Fig. 1: in einer schematischen Seitenansicht ein erstes Ausführungsbeispiel einer Druckweiterverarbeitungsanlage gemäss der Erfindung mit einer Sammelstrecken mit vier Zuführvorrichtungen und einem Bandförderer, einer Einstecktrommel und einem Anleger für Mantelprodukte, zwei Stapeleinrichtungen und einer Abgabeeinrichtung;
- Fig. 2a: eine schematische Seitenansicht auf einen Greifertransporteur mit zwei verschiedenen Typen von Druckendprodukten für zwei verschiedene Routen gemäss einem vorgegebenen Produktionsplan auf dem Weg zu den Stapeleinrichtungen, respektive zur Abgabestation;
- Fig. 2b: eine schematische Seitenansicht auf einen Greifertransporteur mit zwei verschiedenen Typen von Druckendprodukten für zwei verschiedene Routen gemäss einem weiteren vorgegebenen Produktionsplan auf dem Weg zu den Stapeleinrichtungen, respektive zur Abgabestation, wobei zwischen den Druckendprodukten für die zweite Route eine Lücke besteht;
- Fig. 3a: eine schematische Darstellung der Produktpakete, die aus den in der Fig. 2a antransportierten Druckendprodukten für die zwei verschiedenen Routen hergestellt worden sind, wobei der Pfeil m das manuelle Zufügen eines Endpakets zu seiner Route symbolisiert; und
- Fig. 3b: die schematische Darstellung der Produktpakete, gemäss dem Beispiel aus Fig. 2b, wobei wiederum der Pfeil m das manuelle Zufügen des Endpakets zur korrekten Route darstellt.

### WEGE ZUR AUSFÜHRUNG DER ERFINDUNG

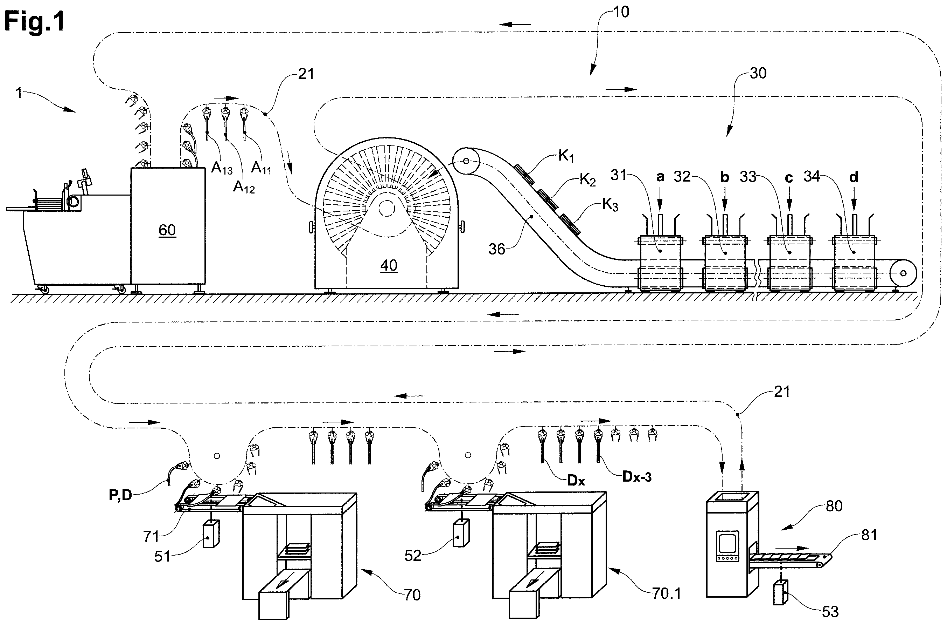

In Fig. 1 ist in seitlicher Ansicht ein erstes Ausführungsbeispiel einer Druckweiterverarbeitungsanlage 1 gemäss der Erfindung wiedergegeben. In einer Vorrichtung 10 zum routengerechten Herstellen von Produkteinheiten P in Form von komplettierten Druckendprodukten D wie Zeitschriften und Zeitungen, die aus einem Mantelprodukt A und einer Mehrzahl von Teilprodukten und/oder Beilagen a, b, d zusammengestellt sind werden die Druckendprodukte D gemäss einem vorgegebenen Produktionsplan routengerecht hergestellt.

Entlang einer Sammelstrecke 30 sind vier Zuführvorrichtungen 31, 32, 33, 34 angeordnet die jeweils Teilprodukten und/oder Beilagen von jeweils einem Typ a, b, c und d auf den Bandförderer 36 der Sammelstrecke abgeben können. Im dargestellten Beispiel werden in der Sammelstrecke Kollektionen K mit Teilprodukten und/oder Beilagen vom Typ a, b und d hergestellt. Die kompletten Kollektionen K werden vom Bandförderer 36 zu einer Einstecktrommel 40 gefördert, wo sie in Mantelprodukte A eingesteckt werden.

Im dargestellten Beispiel stammen die Mantelprodukte A aus einem Anleger 60 und werden mittels eines Greifertransporteurs 21 vereinzelt zur Einstecktrommel 40 transportiert. Schematisch ist dargestellt, dass drei Mantelprodukte A mit den Sequenzpositionen 11, 12 und 13 zur Einstecktrommel gefördert werden. In der Einstecktrommel 40 befindet sich bereits das nicht dargestellte erste Mantelprodukt der Produktesequenz, in das die bereits fertig gestellte und auf dem Bandförderer 36 angeförderte Kollektion K₁ bestehend aus den Teilprodukten a₁, b₁ und d₁ eingesteckt und zum Druckendprodukt komplettiert wird.

Dieses fertige Druckendprodukt ist die erste Produkteinheit, die für diese Route mit der Zusammensetzung: Mantelprodukt A mit eingesteckten Teilprodukten und/oder Beilagen a, b und d hergestellt ist. Je nach Länge der Route werden eine Anzahl x an identischen routenspezifischen Druckendprodukten D mit dem Aufbau A(a, b, d) hergestellt, wobei x der Anzahl der für die Route benötigten Druckendprodukte entspricht.

Aus der Einstecktrommel 40 werden die komplettierten Druckendprodukte D1 bis Dₓ mit dem selben Greifertransporteur 21, der die Mantelprodukte A angeliefert hat, weggefördert und zur Paketherstellung gefördert.

Im dargestellten Ausführungsbeispiel sind zwei Stapeleinrichtungen 70, 70.1 entlang der Förderstrecke hintereinander angeordnet. Vom Greifertransporteur 21 können die Druckendprodukte D durch Öffnen des jeweiligen Greifers an ein Einlaufband 71 der Stapeleinrichtung 70 abgegeben werden. Beim oder nach dem Ablegen auf das Einlaufband 71 wird das aussen liegende Mantelprodukt des Druckendprodukts an der unten liegenden Seitenfläche mit einer Adresse bedruckt und dadurch personalisiert. Da die Adressierung erst nach Herstellung des kompletten Druckendproduktes erfolgt, ist sichergestellt, dass alle adressierten Druckendprodukte, die mit der Adressierung ihren festen Platz in der Routensequenz bekommen, korrekt zusammengestellt sind.

Der Adressdruck erfolgt im dargestellten Beispiel mit einem unter dem Einlaufband 71 angeordneten Drucker 51, der vorzugsweise als Tintenstrahldrucker ausgebildet ist und durch die zwischen den einzelnen Förderbändern des Einlaufbands 71 bestehenden offenen Zwischenräume die vorgegebene Adresse auf ein entsprechendes Adressfeld druckt.

Nach dem Aufdrucken der Adresse ist das Druckendprodukt personalisiert und damit ist seine Position innerhalb der Routensequenz festgelegt. Es muss jetzt nur noch die kurze Strecke in den Stapelschacht der Stapeleinrichtung hinein gefördert und in den Stapelschacht abgegeben werden. Die Wahrscheinlichkeit, dass es hierbei noch zu einem Fehler kommt, der wiederum die Sequenz im Stapel durcheinanderbringen würde, ist äusserst gering. Durch das späte Aufdrucken der Adresse wird somit sichergestellt, dass die Pakete unter Ausnutzung der vollen Leistung der Stapeleinrichtungen 70, 70.1 hergestellt werden können, unter Wahrung der Routensequenz. Eine Verzögerung zur Reparatur oder ein Warten auf die Anlieferung von reparierten oder nachgefertigten Druckendprodukten ist nicht nötig.

Stehen, wie in der Figur 1 dargestellt, zwei Stapeleinrichtungen 70, 70.1 zur Verfügung, so kann der angelieferte Produktestrom auf beide Stapeleinrichtungen 70, 70.1 verteilt werden. Ob die in den beiden Stapeleinrichtungen 70, 70.1 hergestellten Normpakete dabei in der Routensequenz jeweils aufeinander folgen oder ob in jeder Stapeleinrichtungen 70, 70.1 unabhängig eine Untersequenz der herzustellenden Routensequenz gebildet wird kann frei gewählt werden.

Die Abgabe von Druckendprodukten, deren Adressierung und die Bildung von Normpaketen erfolgt in der Stapeleinrichtungen 70.1 genau so wie für die Stapeleinrichtungen 70 beschrieben.

Die vier Druckendprodukte Dₓ₋₃ bis Dₓ gehören zu einer vorgängig verarbeiteten anderen Route und mussten in Folge eines Fehlers beim Zusammentragen der Beilagen nachgefertigt werden. Sie wurden an den beiden Stapeleinrichtungen 70, 70.1 vorbei gefördert und befinden sich auf dem Weg zur Abgabestation 80. In dieser werden Sie an ein Ausförderband 81 abgegeben und können wiederum mittels Drucker 53 mit einer Adresse versehen und personalisiert werden. Aus den vier Druckendprodukten Dₓ₋₃ bis Dₓ wird ein Endpaket für die vorgängige Route gebildet. Dies erfolgt im dargestellten Ausführungsbeispiel von Hand. Das Endpaket wird ebenfalls von Hand an die richtige Position in der Sequenz von Normpaketen der vorgängig hergestellten Pakete für diese Route gebracht. Dadurch kann die Paketsequenz für diese Route komplettiert werden und gleichzeitig können die Stapeleinrichtungen mit voller Geschwindigkeit schon die Pakete für die nächste Route herstellen. Von allen Paketen der Route, die die nachgefertigten Druckendprodukten Dₓ₋₃ bis Dₓ umfasst, muss lediglich das eine Endpaket von Hand positionsrichtig den automatisch in den Stapeleinrichtungen hergestellten Paketen zugefügt werden.

Da nur solche Druckendprodukte adressiert werden, die vollständig und korrekt zusammengestellt wurden, sinkt das Risiko, dass nach dem Adressieren noch ein Fehler auftritt und damit die Produktesequenz manuell oder maschinell korrigiert werden muss, erheblich.

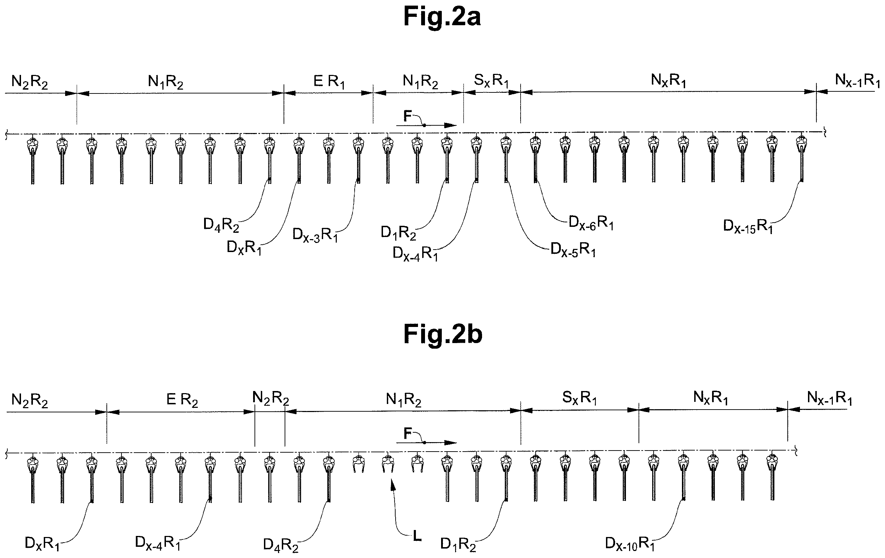

Beim Erstellen des Produktionsplans ist die Anzahl der benötigten Produkteinheiten bekannt. Im vorliegenden Beispiel sind dies Druckendprodukte D in Form von Mantelprodukten A mit eingesteckten Kollektionen aus Teilprodukten und/oder Beilagen a, b und d (kurz [A(a, b, d)]). Die benötigte Anzahl von Druckendprodukten x wird gemäss Produktionsplan auf eine ganzzahlige Anzahl von Normpaketen und nötigenfalls auf ein Spitzenpaket aufgeteilt, die mit Hilfe der beiden Stapeleinrichtungen 70, 70.1 hergestellt werden. Werden für die Route zum Beispiel 807 Druckendprodukte D vom Typ [A(a, b, d)] benötigt und lässt die Dicke der Druckendprodukte D vom Typ [A(a, b, d)] maximal 20 Produkte pro Normpaket zu, so wird die Herstellung von 40 Normpaketen mit je 20 Druckendprodukten und einem Spitzenpaket mit den letzten 7 Druckendprodukten in den Stapeleinrichtungen 70, 70.1 geplant. Kommt es nun bei der Herstellung der Druckendprodukte zu einem Fehler und müssen Druckendprodukte korrigiert oder nachproduziert werden, so spielt dies keine Rolle solange dies noch innerhalb der laufenden Produktion der Anzahl von 807 Druckendprodukten für die Route geschehen kann, ein solcher Fall ist in der Figur 2b dargestellt und wird im Folgenden noch näher erläutert.

Passiert der Fehler aber erst gegen Ende der Herstellung der Produktesequenz, so wird bereits mit der Produktion der Druckendprodukte für die nächste Route begonnen um Wartezeiten zu vermeiden. Die korrigierten oder nachgefertigten Druckendprodukte, die vom Greifertransporteur übernommen werden befinden sich entsprechend zwischen Druckendprodukten einer fremden Route. Dies ist in der Figur 2a dargestellt, die eine schematische Seitenansicht auf einen Greifertransporteur mit zwei verschiedenen Typen von Druckendprodukten für zwei verschiedene Routen R₁ und R₂ gemäss einem vorgegebenen Produktionsplan auf dem Weg zu den Stapeleinrichtungen, respektive zur Abgabestation zeigt.

Über dem Greifertransporteur ist die Zugehörigkeit der Druckendprodukte D zu den jeweiligen Normpaketen N, einem Spitzenpaket S oder einem Endpaket E dargestellt. Bei der Herstellung der gezeigten Sequenz von Druckprodukten D für die Route R₁ kam es zu einem Fehler und drei Druckendprodukte DₓR₁ bis und mit Dₓ₋₃R₁ mussten nachgefertigt werden und werden nun zwischen Druckendprodukten der Route R₂, also in einer falschen Sequenz, im Greifertransporteur gefördert.

Im dargestellten Beispiel liegt die Grösse der Normpakete N bei 10 Produkten. Die 10 Druckendprodukte (beginnend bei Dₓ₋₁₅R₁ und endend bei Dₓ₋₆R₁) für den letzten Normstapel NₓR₁ der Route R₁ sind in Förderrichtung F ganz rechts dargestellt. Ihnen folgen zwei Druckendprodukte Dₓ₋₄R₁, Dₓ₋₅R₁ aus denen in der Stapelvorrichtung ein Spitzenpaket hergestellt wird. Anschliessend folgen die ersten drei Druckendprodukte für die nächste Route R₂, beginnend mit D₁R₂, die einer Stapeleinrichtung zugeführt werden.

Die nachgefertigten Druckendprodukte DₓR₁ bis Dₓ₋₃R₁ folgen innerhalb der Produktesequenz für die Route 2, was aber unproblematisch ist, da sie nicht in der Stapeleinrichtung abgegeben werden, und somit auch nicht in der falschen Route landen, sondern zur Abgabestation gefördert und dort adressiert und zum einem Endpaket für ihre Route R1 zusammengestellt werden.

Die nachfolgenden weiteren sieben Druckendprodukte der Route R₂ werden hingegen an dieselbe Stapeleinrichtung wie die Druckendprodukte D₁R₂ bis D₃R₂ abgegeben und formen zusammen mit diesen das erste Normpaket der zweiten Route N₁R₂.

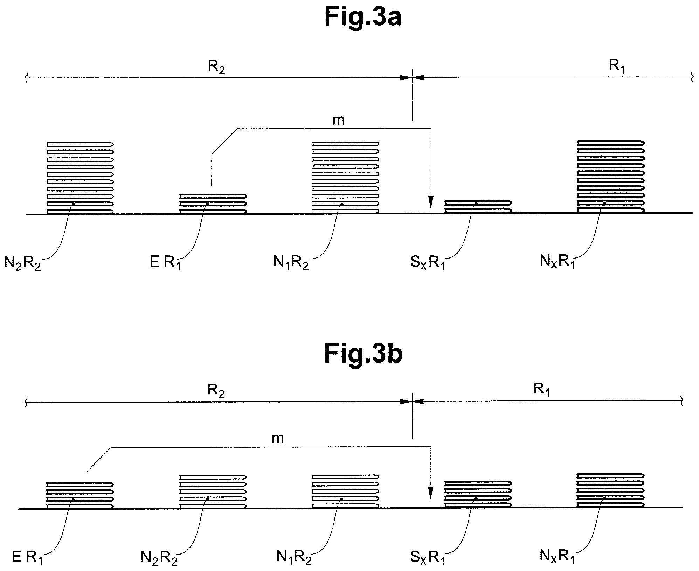

Die gemäss diesem Beispiel hergestellten Pakete für die erste und die zweite Route sind in der Figur 3a skizziert. Die Paketsequenz der Route R₁ endet mit dem Spitzenpaket SₓR₁, das auf das letzte Normpaket NₓR₁ folgt. Das nachträglich in der Abgabestation hergestellte Endpaket ER₁ wird, wie in der Figur mittels Pfeil m angedeutet, von Hand an die richtige Paket-Sequenzposition innerhalb der Route R₁ gebracht. Dadurch wird auch erreicht, dass die die Sequenz der ersten zwei Normpakete N₁R₂ und N₂R₂ der zweiten Route korrekt ist.

Falls Fehler bei der Herstellung der Druckendprodukte nicht nur zu Fehlern in der Sequenz der Druckendprodukte sondern auch noch zu Lücken führen, so können auch solche Sequenzen gemäss der vorliegenden Erfindung problemlos zu sequenzrichtigen Paketen verarbeitet werden.

Ein entsprechendes Beispiel ist in den Figuren 2b und 3b dargestellt, bei dem Normpakete bestehend aus fünf Druckendprodukten hergestellt werden sollen. Aus der Zusammenschau der beiden Figuren wird deutlich, dass die fehler- und lückenhafte Sequenz der Druckendprodukte D im Greifertransporteur mit minimalem manuellem Aufwand zur korrekten Sequenz an routengerechten Paketen mit korrekter Gangfolge innerhalb der Pakete verarbeitet werden kann.

Die nachträglich hergestellten letzten Produkte DₓR₁ bis Dₓ₋₄R₁ werden wiederum nicht an die Stapeleinrichtungen abgegeben, sondern mittels der Abgabestation zum in Figur 3b gezeigten Endpaket ER₁ verarbeitet, das manuell zur Paketsequenz für die erste Route R₁ hinzugefügt wird. Die Lücke L zwischen dem dritten und dem vierten Druckendprodukt D₄R₂ der zweiten Route wird in der Stapeleinrichtung automatisch geschlossen und es wird ein korrektes erstes Normpaket N₁R₂ für die zweite Route R₂ gebildet, wie in Figur 3b gezeigt ist.

Kommt es bei der Herstellung der Druckendprodukte oder der Kollektion von Teilprodukten und/oder Beilagen zu Fehlern, so werden diese fehlerhaften Produkte an nicht in den Figuren dargestellten Stationen ausgeschieden und können allenfalls manuell in Haupt- und Teilprodukte und/oder Beilagen getrennt und wieder den Zuführvorrichtungen 31, 32, 33, 34 und/oder dem Anleger 60 zugeführt.

Um sicherzustellen, dass eine ausreichende Anzahl von korrekt hergestellten Druckendprodukten für die herzustellende Route vorliegt, kann auf bekannte Kontrolleinrichtungen der Anmelderin zurückgegriffen werden. Diese korrekte Anzahl wird entweder während der Herstellung kontrolliert, oder es wird in Kenntnis der üblichen Produktionsfehler der Anlage eine entsprechende Anzahl von zusätzlichen Druckendprodukten für die Route in Auftrag gegeben. Liegt die Fehlerquote bei der Herstellung der Druckendprodukte für die Route innerhalb des üblichen Prozentsatzes, so ist sichergestellt, dass genügend Druckendprodukte adressiert und paketiert werden können. Sind nach dem Herstellen aller benötigter Normpakete und des Endpakets routengerecht hergestellte, aber nicht mehr benötigte Druckendprodukte übrig, so können diese einfach über die Abgabestation 80 ausgeschleust, in ihre Bestandteile zerlegt und, da sie nicht personalisiert sind, in die Zuführvorrichtungen und/oder den Anleger zurückgeführt werden.

## Patentansprüche

1. Verfahren zum Betrieb einer Druckweiterverarbeitungsanlage (1) zum Herstellen und Verarbeiten von Produkteinheiten, insbesondere von komplettierten Druckendprodukten (D) wie Zeitschriften und Zeitungen, die vorzugsweise aus einem Mantelprodukt (A) und einer Mehrzahl von Teilprodukten und/oder Beilagen (a, b, c, d) zusammengestellt sind, wobei die Produkteinheiten gemäss einem vorgegebenen Produktionsplan routengerecht hergestellt und mittels mindestens einer Stapeleinrichtung (70, 70.1) zu einer Sequenz von Paketen (N, S) verarbeitet werden, wobei die Produkteinheiten erst unmittelbar vor oder erst in der mindestens einen Stapeleinrichtung (70, 70.1) personalisiert, vorzugsweise adressiert werden und mittels einer Abgabestation (80), die zur Personalisierung, vorzugsweise zur Adressierung in der Lage ist, alle nicht in der mindestens einen Stapeleinrichtung (70, 70.1) verarbeiteten Produkteinheiten personalisiert und zur Paketierung bereitgestellt werden, **dadurch gekennzeichnet, dass** beim Auftreten von Fehlern bei der Herstellung der Produkteinheiten (P) einer Route (R), die dazu führen, dass korrigierte und/oder nachproduzierte Produkteinheiten (P) in der Produktionssequenz ausserhalb ihrer Route (R) zu liegen kommen, diese korrigierten oder nachproduzierten Produkteinheiten über eine Abgabestation (80) abgegeben und zu einem End-Paket (E) zusammengefasst werden, das anschliessend den übrigen Paketen (N, S) der Route, welche mittels mindestens einer Stapeleinrichtung (70, 70.1) zu einer Sequenz von Paketen verarbeitet werden, zugegeben wird.

2. Verfahren gemäss Anspruch 1, **dadurch gekennzeichnet, dass** aus den Produkteinheiten (P) der Produktesequenz einer Route ohne die korrigierten oder nachproduzierten Produkteinheiten mit der mindestens einen Stapeleinrichtung (70, 70.1) eine ganzzahlige Anzahl x/n von Normpaketen (N) hergestellt wird, wobei x der Gesamtzahl der Produkteinheiten für eine Route minus der korrigierten oder nachproduzierten Produkteinheiten und n der Anzahl an Produkteinheiten im Normpaket entspricht und wobei der zum Erreichen der kompletten Anzahl x an Produkteinheiten benötige Rest in der Stapeleinheit (70, 70.1) oder in der Abgabestation (80) zu einem Spitzenpaket (S) verarbeitet wird.

3. Verfahren gemäss einem der Ansprüche 1 oder 2, **dadurch gekennzeichnet, dass** die Pakete (N, S) auf einer Stapelvorrichtung (70, 70.1) oder verteilt auf mehr als einer Stapelvorrichtung (70, 70.1) hergestellt werden, wobei die Pakete (N, S) bei Verwendung von mehr als einer Stapelvorrichtung (70, 70.1) wechselweise oder routenabschnittweise zur korrekten Paketsequenz umfassend die Normpakete (N) zusammengestellt werden.

4. Verfahren gemäss einem der vorgängigen Ansprüche, **dadurch gekennzeichnet, dass** die in den Stapeleinrichtungen (70, 70.1) hergestellten Pakete (N, S) mit ablesbaren Informationen zu ihrem Inhalt und vorzugsweise einer Paket-Identifikation versehen werden, wobei Informationen auf ein Deckblatt oder direkt auf eine aussenliegende Seite eines aussenliegenden Druckendprodukts im Paket (N) aufgedruckt sind.

5. Druckweiterverarbeitungsanlage (1) zur Durchführung des Verfahrens gemäss einem der vorgängigen Ansprüche und zum Herstellen und Verarbeiten von Produkteinheiten (P), insbesondere von Druckendprodukten (D) wie Zeitschriften und Zeitungen, die vorzugsweise aus einem Mantelprodukt (A) und einer Mehrzahl von Teilprodukten und/oder Beilagen (a, b, c, d) routengerecht zusammengestellt sind, **dadurch gekennzeichnet, dass** die Druckweiterverarbeitungsanlage (1) eine Vorrichtung zum routengerechten Herstellen der Produkteinheiten (10) gemäss einem vorgegebenen Produktionsplan und eine Transporteinrichtung zum Transportieren der Produkteinheiten (P) zu mindestens einer Stapeleinrichtung (70, 70.1) und zu einer Abgabestation (80) umfasst, wobei in Transportrichtung unmittelbar vor oder in der mindestens einen Stapeleinrichtung (70, 70.1) und der Abgabestation (80) eine Personalisierungseinheit angeordnet ist.

6. Druckweiterverarbeitungsanlage (1) gemäss Anspruch 5, **dadurch gekennzeichnet, dass** die Personalisierungseinheit eine Adressiereinheit vorzugsweise in Form eines Druckers (51, 52, 53) oder einer Etikettiereinheit ist.

7. Druckweiterverarbeitungsanlage (1) gemäss Anspruch 6, **dadurch gekennzeichnet, dass** die Vorrichtung zum routengerechten Herstellen der Produkteinheiten (10) eine Sammelstrecke (30) mit einer ersten Fördereinrichtung und eine Mehrzahl von Zuführvorrichtungen (31, 32, 33, 34) für vorzugsweise Teilprodukte und/oder Beilagen (a, b, c, d) zum Herstellen von Kollektionen (K) aus Teilprodukten und/oder Beilagen (a, b, c, d) umfasst.

8. Druckweiterverarbeitungsanlage (1) gemäss Anspruch 7, **dadurch gekennzeichnet**, die Vorrichtung zum routengerechten Herstellen der Produkteinheiten (10) eine Einsteckvorrichtung, vorzugsweise eine Einstecktrommel (40), oder eine Einschlagvorrichtung umfasst in der die Kollektionen (K) aus Teilprodukten und/oder Beilagen (a, b, c, d) in ein Mantelprodukt (A) eingesteckt oder eingeschlagen werden.

9. Druckweiterverarbeitungsanlage (1) gemäss Anspruch 8, **dadurch gekennzeichnet, dass** die Transporteinrichtung einen Greifertransporteur (21) umfasst, der die Mantelprodukte von einer Zuführvorrichtung, vorzugsweise einem Anleger (60), zur Einsteckvorrichtung (40) und nach dem Einstecken der Kollektion (K) aus Teilprodukten und/oder Beilagen (a, b, c, d) die Produkteinheiten (P) zur Stapeleinrichtung (70, 70.1) und/oder zur Abgabeeinrichtung (80) transportiert.

10. Druckweiterverarbeitungsanlage (1) gemäss einem der Ansprüche 6-9, **dadurch gekennzeichnet, dass** die Stapeleinrichtungen (70, 70.1) mit einer Einrichtung zum Zufügen einer Paket-Identifikation versehen sind, wobei diese einen Anleger für ein mit den Paket-Identifikations-Informationen bedrucktes Deckblatt und vorzugsweise einen Deckblattdrucker oder einen Drucker, der die Paket-Identifikations-Informationen direkt auf eine aussenliegende Seite eines aussenliegenden Druckendprodukts im Paket (N) druckt, umfasst.

## Claims

1. Method for operating a postpress processing installation (1) for producing and processing product units, particularly completed final printed products (D) such as magazines and newspapers, which are preferably compiled from a jacket product (A) and a plurality of part products and/or inserts (a, b, c, d), wherein the product units are manufactured according to a predetermined production plan in a manner suitable for the route and are processed by means of at least one stacking device (70, 70.1) to form a sequence of packages (N, S), wherein the product units are only personalised, preferably addressed, immediately before or when they are in the at least one stacking device (70, 70.1), and are made available for packaging by means of a discharge station (80) which is able to personalise, preferably address all the product units that have not been processed in the at least one stacking device (70, 70.1) and made available for packaging, **characterized in that** if errors occur during manufacture of the product units (P) for a route (R) with the result that product units (P) that have been rectified and/or produced in additional quantities end up outside their route (R) in the production sequence, said product units that have been rectified or produced in additional quantities are discharged via a discharge station (80) and collected into an end package (E) which is then added to the other packages (N, S) on the route that are processed by means of at least one stacking device (70, 70.1) to form a sequence of packages.

2. Method according to Claim 1, **characterized in that** a whole number x/n of standard packages (N) is produced from the product units (P) in the product sequence of a route, without the product units that have been rectified or produced in additional quantities, with the at least one stacking device (70, 70.1), wherein x is the total number of product units for a route minus the product units that have been rectified or produced in additional quantities, and n represents the number of product units in the standard package, and wherein the remainder that is required to achieve the complete number x of product units is processed to form a part package (S) in the stacking unit (70, 70.1) or in the discharge station (80).

3. Method according to either of Claims 1 or 2, **characterized in that** the packages (N, S) are produced on a single stacking device (70, 70.1) or distributed among more than one stacking device (70, 70.1), and when more than one stacking device (70, 70.1) is used the packages (N, S) are compiled into the correct package sequence comprising of the standard packages (N) alternately or by sections of the route.

4. Method according to any one of the prececing claims, **characterized in that** the packages (N, S) produced in the stacking devices (70, 70.1) are provided with readable information regarding their content and preferably with a package identification, said information being printed on a cover sheet or directly on an external surface of an externally situated final printed product in the package (N).

5. Postpress processing installation (1) for carrying out the method according to any one of the preceding claims and for the production and processing of product units (P), in particular final printed products (D) such as magazines and newspapers, which are preferably compiled from a jacket product (A) and a plurality of part products and/or inserts (a, b, c, d) in a manner suitable for the route, **characterized in that** the postpress processing installation (1) comprises a device for the production of the product units (10) according to a predetermined production plan in a manner suitable for the route and a transport device for transporting the product units (P) to at least one stacking device (70, 70.1) and to a discharge station (80), wherein a personalisation unit is arranged immediately before the at least one stacking device (70, 70.1) and the discharge station (80) in the direction of transport, or inside said device and station.

6. Postpress processing installation (1) according to Claim 5, **characterized in that** the personalisation unit is an addressing unit preferably in the form of a printer (51, 52, 53) or a labelling unit.

7. Postpress processing installation (1) according to Claim 6, **characterized in that** the device for production of the product units (10) in a manner suitable for the route comprises a collecting zone (30) having a first transport device and a plurality of feed devices (31, 32, 33, 34) for preferably part products and/or inserts (a, b, c, d) for producing collections (K) of part products and/or inserts (a, b, c, d).

8. Postpress processing installation (1) according to Claim 7, **characterized in that** the device for production of the product units (10) in a manner suited for the route comprises an inserting device, preferably an inserting drum (40), or a wrapping device, in which the collections (K) of part products and/or inserts (a, b, c, d) are inserted or wrapped in a jacket product (A).

9. Postpress processing installation (1) according to Claim 8, **characterized in that** the transport device comprises a gripper conveyor (21), which transports the jacket products from a feed device, preferably a feeder (60), to the inserting device (40) and, after insertion of the collection (K) consisting of part products and/or inserts (a, b, c, d), transports the product units (P) to the stacking device (70, 70.1) and/or to the discharge station (80).

10. Postpress processing installation (1) according to any one of Claim 6 to 9, **characterized in that** the stacking devices (70, 70.1) are provided with a device for adding a package identification, wherein said device comprises a feeder for a cover sheet printed with the package identification information and preferably a cover sheet printer or a printer which prints the package identification information directly onto an external surface of an externally situated final printed product in the package (N).

## Revendications

1. Procédé de fonctionnement d'une installation de traitement secondaire de l'impression (1) pour la production et le traitement d'unités de produits, notamment de produits finaux d'impression (D) terminés comme des magazines et journaux, qui sont composés de préférence d'un produit principal (A) et d'une pluralité de produits partiels et/ou encarts (a, b, c, d), dans lequel les unités de produits sont produites selon un plan de production prescrit conformément à un trajet et sont traitées au moyen d'au moins un dispositif d'empilage (70, 70.1) en une séquence de paquets (N, S), dans lequel les unités de produits sont personnalisées seulement directement avant ou seulement dans au moins un dispositif d'empilage (70, 70.1), de préférence sont adressées et sont personnalisées et fournies en vue de la mise en paquets au moyen d'un poste de distribution (80), qui est mesure de personnaliser, de préférence d'adresser, toutes les unités de produits non traitées dans au moins un dispositif d'empilage (70, 70.1), **caractérisé en ce que** lorsque des erreurs se produisent pendant la production des unités de produits (P) d'un trajet (R), qui entraînent que des unités de produits (P) corrigées et/ou produites à nouveau se retrouvent dans la séquence de production à l'extérieur de leur trajet (R), ces unités de produits corrigées ou produites à nouveau sont distribuées par l'intermédiaire d'un poste de distribution (80) et sont assemblés en un paquet final (E), qui est ensuite ajouté au reste des paquets (N, S) du trajet, qui sont traités au moyen d'au moins un dispositif d'empilage (70, 70.1) en une séquence de paquets.

2. Procédé selon la revendication 1, **caractérisé en ce que** à partir des unités de produits (P) de la séquence de produits d'un trajet sans les unités de produits corrigées ou produites à nouveau, au moyen d'au moins un dispositif d'empilage (70, 70.1), un nombre entier x/n de paquets normalisés (N) est produit, dans lequel x correspond au nombre total des unités de produits pour un trajet moins les unités de produits corrigées ou produites à nouveau et n correspond au nombre d'unités de produits dans le paquet normalisé et dans lequel le reste nécessaire pour atteindre le nombre complet x d'unités de produits est traité dans l'unité d'empilage (70, 70.1) ou dans le poste de distribution (80) en un paquet de pointe (S).

3. Procédé selon une des revendications 1 ou 2, **caractérisé en ce que** les paquets (N, S) sont produits sur un dispositif d'empilage (70, 70.1) ou répartis sur plus d'un dispositif d'empilage (70, 70.1), dans lequel les paquets (N, S) lors de l'utilisation de plus d'un dispositif d'empilage (70, 70.1) sont assemblés en alternance ou sur des sections de trajet en une séquence de paquets correcte comprenant les paquets normalisés (N).

4. Procédé selon une des revendications précédentes, **caractérisé en ce que** les paquets (N, S) produits dans les dispositifs d'empilage (70, 70.1) sont pourvus d'informations pouvant être lues relatives à leur contenu et de préférence d'une identification de paquet, dans lequel les informations sont imprimées sur une page de couverture ou directement sur un côté situé à l'extérieur d'un produit imprimé final situé à l'extérieur dans le paquet (N).

5. Installation de traitement secondaire de l'impression (1) pour mettre en oeuvre le procédé selon une des revendications précédentes et pour produire et traiter des unités de produits (P), notamment des produits finaux d'impression (D) comme des magazines et journaux, qui sont composés de préférence d'un produit principal (A) et d'une pluralité de produits partiels et/ou encarts (a, b, c, d), **caractérisée en ce que** l'installation de traitement secondaire de l'impression (1) comprend un dispositif de production conformément à un trajet des unités de produits (10) selon un plan de production prescrit et un dispositif de transport pour transporter les unités de produits (P) vers au moins un dispositif d'empilage (70, 70.1) et vers un poste de distribution (80), dans laquelle une unité de personnalisation est disposée dans la direction de transport directement avant ou dans au moins un dispositif d'empilage (70, 70.1) et dans le dispositif de distribution (80).

6. Installation de traitement secondaire de l'impression (1) selon la revendication 5, **caractérisée en ce que** l'unité de personnalisation est une unité d'adressage, de préférence sous forme d'une imprimante (51, 52, 53) ou d'une unité d'étiquetage.

7. Installation de traitement secondaire de l'impression (1) selon la revendication 6, **caractérisée en ce que** le dispositif de production conforme à un trajet des unités de produits (10) comprend une section d'assemblage (30) avec un premier dispositif de transport et une pluralité de dispositifs d'alimentation (31, 32, 33, 34) de préférence de produits partiels et/ou d'encarts (a, b, c, d) pour produire des collections (K) composées de produits partiels et/ou encarts (a, b, c, d).

8. Installation de traitement secondaire de l'impression (1) selon la revendication 7, **caractérisée en ce que** le dispositif de production conforme à un trajet des unités de produits (10) comprend un dispositif d'emboîtement, de préférence un tambour d'encartage (40) ou un dispositif de pliage dans lequel les collections (K) composées de produits partiels et/ou encarts (a, b, c, d) sont emboîtées ou pliées dans un produit principal (A).

9. Installation de traitement secondaire de l'impression (1) selon la revendication 8, **caractérisée** en ce le dispositif de production conforme à un trajet des unités de produits (10) selon la revendication 8, **caractérisée en ce que** le dispositif de transport comprend un transporteur à pince de préhension (21), qui transporte les produits principaux d'un dispositif d'alimentation, de préférence d'un margeur (60), vers le dispositif d'emboîtement (40) et après l'encartage de la collection (K) de produits partiels et/ou encarts (a, b, c, d) les unités de produits (P) sont transportées vers le dispositif d'empilage (70, 70.1) et/ou vers le dispositif de distribution (80).

10. Installation de traitement secondaire de l'impression (1) selon une des revendications 6-9, **caractérisée** en ce les dispositif d'empilage (70, 70.1) sont pourvus d'un dispositif pour ajouter une identification de paquet, dans laquelle celui-ci comprend un margeur pour une page de couverture imprimée avec des informations d'identification de paquet et de préférence une imprimante de page de couverture ou une imprimante, qui imprime les informations d'identification de paquet directement sur le côté situé à l'extérieur d'un produit imprimé final situé à l'extérieur dans le paquet (N).
